# EUROPEAN PATENT SPECIFICATION

(11) **EP 4 086 235 B1**
(45) Date of publication and mention of the grant of the patent: **30.07.2025**
(21) Application number: 21172023.0
(22) Date of filing: 04.05.2021
(51) Int. Cl.: C04B 41/52, C04B 41/00, C04B 41/89, B28B 11/04, B28B 11/08, B41J 3/407, C04B 111/54, B41M 5/00

(54) **A METHOD FOR MANUFACTURING CERAMIC TILES**
EIN VERFAHREN ZUR HERSTELLUNG VON KERAMIKFLIESEN
UN PROCÉDÉ DE FABRICATION DE CARREAUX DE CÉRAMIQUE

(43) Date of publication of application: 09.11.2022
(73) Proprietor: Unilin, BV, 8710 Wielsbeke (BE)
(72) Inventor: VAN DER STOCKT, Bart, B-9630 Zwalm (BE)
(74) Representative: Unilin Technologies

(56) References cited:
- CN-A- 110 746 203
- CN-A- 111 393 906
- CN-A- 112 358 326
- FR-A1- 2 468 566
- DATABASE WPI Week 202008, Derwent World Patents Index; AN 2020-96832R, XP002804543

## Description

The present invention relates to a method for manufacturing ceramic tiles.

Ceramic tiles usually comprise a substantially panel-shaped body of ceramic material, having a decorative surface which may be glazed or unglazed. The decorative surface may also have a pattern, representing, for example, an imitation of wood, natural stone, marble, concrete, resin or any other design. The decorative surface of the tile may also comprise a surface structure, representing the grain of stone or wood, for example.

The surface structure is produced by pressing during the forming of the tile. In practice, the powders forming the ceramic mixture are placed in a mould and pressed with a die having a structure corresponding to the negative of the surface structure of the tile. Pressing may take place in a continuous process, or another process in which no mould is used, where the negative structure is applied to a compacting belt. The need to use dies, or other preformed negatives, limits the variability of the surface structures that can be produced. Furthermore, the negatives are subject to wear, due mainly to the hardness of the powders and the high production rate. The wear makes it necessary to regenerate or replace the negatives, which consequently increases costs, especially in the case of compacting belts. Furthermore, the substitution of the mould, which occurs every time that it is necessary to change the product or when the mould in use is worn, require time and causes the interruption of the production.

During private research, inventors have found that an alternative solution is provided by the application of sinking agents to the glaze covering the upper surface of tiles. Sinking agents are substances capable of chemically interact with the vitreous structure of the glaze so that during the firing step of the process depressions are created in the surface of the tile. Said sinking agents are provided on top of the glaze together with colored inks for forming a décor on the top surface of the tile. However, during private research, the inventors have observed that the chemical interaction of the sinking agent with the glaze and with the pigments contained in the inks may cause an alteration in the final color of the décor, in particular a variation toward yellow of the color, and may cause a local increase of the glossy degree of the surface where the sinking agent has been provided. Inventors have observed that the depth of the relief obtainable with the sinking agent is considerably lower than the thickness of the surface structure that can be produced by pressing or compaction.

FR2468566A1 relates to a process for producing tiles with an antique finish.

CN111704480A describes a method for manufacturing tiles with a marble texture.

CN110746203A discloses a digital process for manufacturing a ceramic tile with a mold effect texture.

CN111393906A describes a method for decorating ceramic tiles using a superhydrophobic ceramic ink.

CN112358326A relates to process for preparing tiles with a matt and deep engraving effect.

The present invention proposes, in the first place, to provide an alternative method for producing ceramic tiles, which, according to some of its embodiments, is intended to resolve one or more of the problems arising from the prior art.

The present invention, according to a first independent aspect, proposes a method for manufacturing a ceramic tile that comprises the steps of providing a green tile having at least a green ceramic body with an upper surface, providing at least a first surface covering on said upper surface of the green ceramic body and firing said green tile to obtain a ceramic tile having a surface structure on its upper surface. In the context of the present invention, "surface structure" is taken to mean a three-dimensional relief formed by recesses (or excavation) and/or protrusions. The surface structure is preferably made at least partially preferably completely in the first surface covering. Preferably said surface structure can comprise a maximum deepness of the excavation, or maximum height of the protrusion, that is above 0,1mm, more preferably between 1 and 0,1 mm, for example between 0,75 mm and 0,25mm. In the context of the present invention with green tile is intended a semi-product formed by a raw tile that has not yet been subjected to a high temperature firing process that causes the consolidation of the components of the raw tile, mainly formed by powders of raw materials, into the final and solid material.

In accordance with the first aspect the method has the characteristic of comprising a step of applying at least one sinking agent on the upper surface of the green tile before said step of providing the first surface covering, said sinking agent determining said surface structure. In this way, since the sinking agent is applied before the first surface covering is provided its effect of creating the structure in the first surface covering itself may allow obtaining higher deepness of the structure. In fact, inventors have found that in this way the interaction between the sinking agent and the first surface covering starts from the bottom of the first surface covering instead from the top, resulting in a more effective generation of the surface structure. Moreover, the inventors have found that in this way it is also possible reduced the visual effect of the sinking agent in the decorative surface of the tile, in term of increase of glossy degree and/or color variation. Furthermore, since the negative effects of the sinking agents are reduced it is also possible to increase the quantity of sinking agent that is provided on the surface of the tile so that it is possible to obtain further deeper structures and more detailed structures.

The sinking agent is at least one physical sinking agent, i.e. a sinking agent that is able to physically interact with the first surface covering in order to create the surface structure. Said physical interaction occurs between the sinking agent and a vehicle or solvent that is used to apply the first surface covering. The first surface covering is applied in the so called "wet form", i.e. in liquid form where the first surface covering material is in suspension in a solvent or vehicle. Said vehicle is water.

Thanks to this physical interaction the physical sinking agent can locally repel or attract the vehicle of the first surface covering thereby forming an excavation or a protrusion in the surface of the tile. In the preferred embodiment the first surface covering is repelled by the physical sinking agent to cause an excavation in the surface of the tile. It is to be noted that in case of physical sinking agents are used, the surface structure can be at least partially formed, and be visible, in the green tile before the firing step. Said physical interaction can be caused, for example, by a low affinity between the vehicle or solvent of the first surface covering and the physical sinking agent, e.g. a different polarity. Since the vehicle of the first surface covering is a polar substance, i.e. water or a water-based substance, the physical sinking agent can be a non-polar substance or a substance with a low polarity, for example an oily substance or an organic substance. The physical sinking agent comprises a hydrophobic substance. The physical interaction can also be caused by different surface tension between the first surface covering and the physical sinking agent. In the most preferred embodiment, the physical sinking agent can only partially interact, preferably repel, the surface coating. In this way, the physical sinking agent can locally reduce the amount of the surface coating but not locally removing completely the surface coating, so that the portion or portions of the green body where the physical sinking agent is provided can be in any case covered by the first surface covering, albeit in a lower amount (and thickness) because of the action of the physical sinking agent, so that a complete impermeabilization of the upper surface of the body of the ceramic tile is ensured.

The sinking agent is at least one chemical sinking agent, i.e. a sinking agent that is able to chemically interact with the first surface covering in order to create the surface structure. The interaction occurs between the chemical sinking agent and the first surface covering material rather than with the vehicle or solvent of the first surface covering. It is to be noted that in case of chemical sinking agents are used, the surface structure can be at least partially formed during the firing step and be visible only during and/or after the firing step. The first surface covering comprises a glassy substance, for example a glaze, and the chemical sinking agent comprises substances able to interact with the glassy structure of the first surface covering, and comprises metal oxides. For example, the chemical sinking agent can be configured to locally reduce modify, preferably reduce, the viscosity of the glassy substance forming the first surface covering. The chemical sinking agent can also cause a local increase of the density of the glassy substance. The local reduction of the viscosity, and/or of the density, can cause the glassy structure to collapse in correspondence of the portion of the uppers surface of the tile where the chemical sinking agent has been provided thereby forming an excavation. For example, the chemical sinking agent can comprise metal oxides and metal complex. In the most preferred embodiment, the chemical sinking agent can comprise a bismuth oxide, for example bismuth vanadate, lead oxide, tin oxide, oxide of alkali metals, alkaline earth metal ecc. Oxides of heavy metals are preferred like oxides of bismuth, lead and tin. Amongst the latter, oxides of bismuth are preferred because their low toxicity compared to the toxicity of lead.

The step of providing the sinking agent involves applying at least one physical sinking agent and at least one chemical sinking agent. In this way, it is possible to combine the effects of the sinking agents according to both the first and second possibility thereby obtaining a structure with deeper excavations. Moreover, the combination of the two typologies of sinking agents permits to maximize the effect of formation of the surface structure and at the same permits to reduce or limit their drawbacks. For example, since the chemical interaction of the chemical sinking agent can cause the variation of the color of the décor and/or an increase of the glossy degree, the combination of the chemical sinking agent itself with the physical sinking agent can reduce the color variation or increase of gloss degree while guaranteeing a deep structure. The combination on a same tile of two different sinking agents may also allow to improve the definition and/or the variation of the surface structure on the tile. In fact, in this way it is possible to provide on different portions of the upper surface different sinking agent that can be differently effective in creating the surface structure.

According to a deviant embodiment, in case multiple sinking agents are provided on the green tile, it is possible that one sinking agent is provided before providing the first surface covering and that a second sinking agent can be provided after that the first surface covering has been provided. In this case it is possible to further varying the interaction of between the sinking agents.

The chemical sinking agent can preferably be provided before the physical sinking agent. In this way, in case they are provided on a same portion of the upper surface of the green tile, so that they overlap each other, the physical sinking agent can be disposed above the chemical sinking agent and the first surface covering, in particular its vehicle, can be provided directly in contact with the physical sinking agent. Therefore, the physical sinking agent can be immediately more effective in creating the surface structure, in particular before firing, whereas the chemical sinking agent can be more effective later on, for example, during the firing step. It is possible, in fact, that the physical sinking agent evaporates or degrade before or during the firing step so that it doesn't impede the interaction between the chemical sinking agent and the first surface covering.

The sinking agent is provided on the upper surface of the green tile according to a predetermined pattern. For example, said pattern can imitate or represent a wood or stone texture, like wood veins or pores. In this way, the sinking agent can cause the formation of a structure that is substantially corresponding to the predetermined pattern. Each sinking agent is provided according to a respective predetermined pattern. Said pattern partially or completely corresponds so that in the corresponding portions of the patterns there can be a synergic effect of the sinking agents. On the other hand, differences in said patterns may allow to obtain a higher variation of the characteristics of the surface structure, like for example variation of the depth.

The sinking agent is applied via digital inkjet printing. Digital inkjet printing allows providing the sinking agent according to a large variety of predetermined pattern and to quickly shift from one pattern to another pattern thereby increasing not only the offer of products on the market but also the flexibility of the entire tile manufacturing process. Digital inkjet printing of the sinking agent can be performed by means of an inkjet printer comprising one or more printheads. The inkjet printer can be a single pass printer or a multi-pass printer, albeit single pass printers are preferred since allow higher production rate. In the preferred embodiment the sinking agent can be printed with a resolution above 200 DPI, preferably above 300 DPI. In less preferred embodiments, the sinking agent can be provided through alternative printing techniques like, for example, flexography or serigraphy. The sinking agent can be provided in form of a sinking ink, preferably suitable for inkjet printing. The sinking ink can comprise a liquid vehicle or solvent. Said vehicle or solvent can comprise water or water-based substances, and/or organic substances like glycol ether, fatty acid ester, citrates or other substances. The sinking ink can also comprise a solid portion like the ceramic raw materials, for example metal oxides, clays or frits. The sinking ink can also comprise pigments or dye. Said pigments or dyes of the sinking ink are preferably organic and have the scope of making visible the pattern of the sinking agent immediately after printing so to allow a control of the quality of the print.

According to the preferred embodiment of the first independent aspect, the green body comprises at least a ceramic mixture suitable for the production, after firing, of a tile of ceramic material such as porcellaneous stoneware, monoporosa (also called single fired wall tile), white or red body ceramic, maiolica, or terracotta. The mixture comprises a mix of powders of raw materials such as clay, kaolin, feldspar, quartz, metal oxides, frits and other raw materials.

In the method according to the invention, the green body may be formed by compacting the mixture by continuous compaction and/or discontinuous pressing. Preferably, the compaction of the mixture is carried out with moulds and/or compacting belts capable of producing a substantially smooth upper surface of the raw tile. However, in alternative embodiments, the mould and/or the compacting belt could comprise a structure that is the negative of a basic structure to be produced on the upper surface of the green body. In this case, it would be possible to produce a first basic structure in the green body during forming, and then, after the forming step, to execute a step for producing a second surface structure in the first surface covering according to the first independent aspect of the invention. In this way, the surface structure in the first surface covering may be limited to modifications and/or aspects of detail relative to the basic structure, so as to increase the variability of the structures. Said basic structure ca have a deepness above 0,1 mm, more preferably above 0,5 mm, for example above 1mm. In this way it can be possible to have a deeper basic structure in the body of the tile and a more detailed, more variable and less deep structure in the surface covering. It is also possible that the method comprises the step of identifying the basic structure on the upper surface of the green body and the step of selecting the pattern of the sinking agent on the basis of the said identification. In this way it may be possible to coordinate the basic structure and the surface structure, in form of the pattern of the sinking agent, in order to optimize the aesthetic and the natural appearance of the final ceramic tile. The identification of the basic structure can be performed via a 3D scanner or via reading of a marker in the tile, for example with optical readers.

Preferably, the method may comprise a drying step, to eliminate at least some of any residual moisture from the mixture forming the green body, and to impart greater mechanical strength to the green body itself. The drying is preferably carried out at temperatures above 80°C, for example above 100°C. The drying is carried out after the step of forming the green body, and may preferably be carried out before the step of providing the sinking agent. Preferably, the raw tile after drying has a residual moisture content of less than 5%, or preferably less than 1%.

Preferably the sinking agent can be provided after said drying step. In this case the method may also comprise the step of cooling down the upper surface of the green tile, at least of the green body thereof before applying the sinking agent. In order to do so a cooler can be installed before the device for providing the sinking agent. In fact, since after the dryer the green tile can be at a relatively high temperature the sinking ink can dry in the printheads thereby damaging them. Thanks to the cooler the temperature of the green tile, at least on its upper surface, can be, at least temporarily, lowered down so that it is possible to reduce the risk of damaging the printheads.

In the preferred embodiment of the invention, the sinking agent can be applied directly onto the upper surface of the green body, i.e. without the interposition of any intermediate layer between the green body and the sinking agent. The inventors have found that in this way the sinking agent can interact only with the first surface covering above it thereby forming the surface structure with an improved efficacy. Moreover, the inventors have found that in this way the sinking agent can be provided on a relatively dry surface and in a relatively dry environment so that the sinking agent can be provided with a higher accuracy and reducing the risk of damaging means or devices for providing the sinking agent like, for example, inkjet printheads. In fact, if the sinking agent would be provided subsequent to the application of an intermediate layer on the upper surface of a green body, like for example an engobe or a glaze, it could be applied on a humid surface and/or in a humid environment because of the evaporation of the vehicle or solvent of said intermediate layer, and this humidity could harm the means or devices for providing the sinking agent like, for example, inkjet printheads. In fact, it is to be noted that any layer or surface covering on top of the green body are normally provided after that the body exits from a dryer for removing water from the mixture of raw material forming the green body itself, therefore the green body can be hot, for example at a temperature above 50°C, in particular above 70°C, more in particular at a temperature equal or above 90°C. Anyway, it is not excluded that, in deviant embodiment, the sinking agent could be provided on top of an intermediate layer. In this way, the intermediate layer could improve the impermeabilization of the body in case the sinking agent effect causes, even unwillingly, an excessive opening of the first surface covering thereby leaving voids or holes in the first surface covering. The intermediate layer, if present, can preferably comprise an engobe, or alternatively a glaze. As already mentioned, the intermediate layer may be applied after the drying step. In the alternative embodiment where the intermediate layer is provided, it may be applied wet, by pouring, spraying or airbrushing for example, so as to deposit a substantially uniform layer on the upper surface of the substrate. However, the intermediate layer can be applied also by other methods, for example by digital printing, screen printing or flexography, or by dry application methods.

In the preferred embodiment of the invention, the first surface covering can comprise a glaze or an engobe or a smaltobbio. For a purpose of the invention, a smaltobbio is a substance that comprises at least a frit and ceramic raw materials like clay, quartz, opacifiers, silica and/or pigments like metal oxides. The smaltobbio is a coating substance that has the function of impermeabilize the body of the tile (after firing) providing a background color for a décor on the tile and/or covering the color of the body; moreover it may show a thermal expansion behavior that is similar to that of the body so that it can be applied on the body without the interposition of an intermediate layer. In fact, smaltobbio is a terminology that is used in the art to identify a coating that is vitreous and comprises ceramic raw materials so that it can be applied directly on the body, whereas normally with glaze it is meant a coating that is often applied on the body with the interposition of an intermediate layer, in particular of an engobe. In practice, a smaltobbio can be a mixture comprising a glaze and an engobe. The first surface covering is provided on the upper surface of the green body after that the sinking agent has been provided. The first surface covering is applied wet, in the form of a slurry comprising a liquid solvent or vehicle of water, and the surface covering material in powder form. The first surface covering material is preferably applied by spraying or airbrushing but, alternatively it can be applied, by pouring or via other techniques like, for examples, digital printing, screen printing or flexography, or by dry application methods. Spraying or airbrushing are preferred techniques for the application of the first surface covering because they allow an uniform and quick application of a relatively high quantity of first surface covering material, so to form a thicker surface covering in which a deeper surface structure can be formed. Preferably said slurry comprises a density of above 1300 g/l, more preferably between 1300 g/l and 1700 g/l, for example 1650 g/l. A higher density of the slurry means a higher dry content thereof. In the context of the invention it is preferrable to apply the first surface covering in the form of an highly dense slurry so that it is possible to apply a high quantity of first surface covering material while keeping short the time for the evaporation of the vehicle of the slurry which could harm subsequent passages of the method. The first surface covering can be applied in a dry weight above 200 g/ m², more preferably above 500g/ m², for example between 200 and 1000 g/m², more preferably between 600 and 900 g/m². Said quantity are relatively high, for example almost the double of the quantity on top of a ceramic tile so that deeper surface structure can be obtained.

It should also be noted that the method may provide the step of applying a décor to the upper surface of the green tile. Preferably, the décor is printed, preferably by digital printing, inkjet for example, although in alternative embodiment other printing methods such as screen printing, flexography, offset and rotogravure are possible. However, inkjet printing is preferred, because it allows printing a high variety of décor with a relatively high resolution. For example, the décor can be printed with a resolution above 200 DPI, preferably above 300 DPI, for example 360. Preferably the pattern of the sinking agent and the décor can be printed with the same resolution. The décor preferably can imitate a wood, marble, natural stone, cement or metal décor. Of course, the décor can be according to any kind of design.

In the most preferred, the design may have characteristics corresponding to structural features of the surface structure and/or of the basic structure. For example, where the design represents a pore of wood or stone, the surface structure may have a recess representing the pore. In this way the realism of the design may be improved. Moreover, in this way it may be possible to compensate phenomena of light scattering or reflectance that are typical for product with glassy surface like ceramic tile, in such a way to give the impression of an even deeper structure and/or in such a way to reduce the glassy and artificial appearance of the surface of the tile so to improve the similarity with the material imitated by the décor, for example wood, stone, cement or metal. For example, the décor can comprise darker area that may be printed at least partially in correspondence of excavation of the surface structure. To this aim it is possible that the pattern of the sinking agent at least partially, preferably completely corresponds to the décor. To this aim it is possible that the method comprises the step of identifying the basic structure and or the pattern of the sinking agent on the upper surface of the green tile, for example when approaching the inkjet printer for printing the décor, and the step of selecting the décor to be provided on the basis of the said identification. In this way it may be possible to coordinate the basic structure and/or the surface structure with the décor. The identification of the basic structure and/or of the pattern of the sinking agent can be performed via a scanner, for example a 3D scanner, or via reading of a marker in the tile, for example with optical readers. It is also possible that the identification is performed at an early stage, for example in the moment that the sinking agent is provided on the green tile. In this case, the device for providing the sinking agent can be connected to a first control unit which is connected to a first memory, said control stores in the memory a first sequence of patterns. Said first sequence identifies the sequence in which the patterns sinking agent are provided on multiple green tiles running on a line. A second control unit connected to a device for providing the décor is connected (even wireless) to said first memory and to a second memory. Said second control unit creates a second sequence of pattern on the basis of the first sequence of pattern, wherein said second sequence of patterns identifies the sequence in which the décors have to be printed on the multiple green tiles running on the line. It is to be noted that said first and second control unit and/or said first and second memory can be the same. It is also possible that a third control unit, for example connected to a 3D scanner or to an optical reader, and a third memory create and store a third sequence of pattern identifying the sequence in which multiple green tiles having different basic structures are running on the line and are approaching the device for providing the sinking agent. In this latter case it is possible that the first sequence of pattern is created by the first control unit on the basis of the third sequence of pattern. It is noted that the third control unit and/or the third memory can the same of the first or second control unit and/or the first or second memory.

In some embodiments, the method may also comprise a step of applying a second surface covering, glaze and/or grog, to the upper surface of the green tile. In particular, the second surface covering may be applied after the application of the first surface covering, and preferably after the application of said decor. Advantageously, the second surface covering may be transparent or translucent. The second surface covering may be preferably applied wet, by pouring or airbrushing for example, so as to deposit a substantially uniform layer on the upper surface of the tile. There is no reason why the protective coating should not be applied by other methods, for example by digital printing, screen printing or flexography, or by dry application methods. Preferably the second surface coating is applied wet rather than dry. In fact, wet application of the second surface covering material provides for thinner second surface covering compared to dry application of second surface covering material, so that the second surface covering can be sufficiently thin to adapt to the relief formed in the first surface covering in such a way that said relief manifest itself through the second surface covering and can be visibly and haptically perceived on the surface of the ceramic tile.

The method also comprises the step of firing the tile at a temperature of more than 900°C, or preferably more than 1000°C, for example at or above 1200°C, preferably between 1200°C and 1250°C. The firing step follows the step of providing the first surface covering and of providing the sinking agent and preferably follows the steps of applying the second surface covering and the décor, so that the green tile, the green body and all the layers above its upper surface, can be fired in a unique process.

It is to be noted that the fact that the surface structure is obtained by the combination of multiple sinking agents, possibly different each other, forms an independent aspect of the disclosure, that is particularly independent from the fact that the sinking agents are provided before or after the first surface covering. Therefore, according to its second independent aspect the disclosure relates to a method for manufacturing a ceramic tile, comprising the steps of providing a green tile having at least a green ceramic body with an upper surface, providing at least a first surface covering on said upper surface of the green ceramic body and firing said green tile to obtain a ceramic tile having a surface structure on its upper surface, with the characteristic that the method comprises the step of providing at least two sinking agents, possibly that are different each other, on the green tile for forming said surface structure in the first surface covering. By combining multiple sinking agents, in particular if different each other it may be possible to maximize the effect of forming the surface structure, possibly while at the same time reducing the drawback of each sinking agent. Preferably at least one of the sinking agents is a physical sinking agent. Preferably at least one of the sinking agents is a chemical sinking agent. The method according to the second aspect can comprise one or more of the features described in relation to the first independent aspect.

It is also to be noted that the fact that said sinking agent is applied by means of inkjet printing forms an independent aspect of the disclosure, that is particularly independent from the fact that the sinking agent is provided before or after the first surface covering. Therefore, according to its third independent aspect, the disclosure relates to a method for manufacturing a ceramic tile, comprising the steps of providing a green tile having at least a green ceramic body with an upper surface, providing at least a first surface covering on said upper surface of the green ceramic body and firing said green tile to obtain a ceramic tile having a surface structure on its upper surface, with the characteristic that the method comprises the step of inkjet printing at least one sinking agent the green tile for forming said surface structure in the first surface covering. Inkjet printing allows for a flexible method for forming the surface structure that provides for an improved production rate and an improved offer of products. The method according to the third aspect can comprise one or more of the features described in relation to the first independent aspect.

It is also to be noted that the fact that the pattern of the sinking agent and the décor at least partially corresponds and/or the fact that the décor is selected on the basis of the pattern of the sinking agent, for example that the method comprises the step of identifying the pattern of the sinking agent and selecting the décor to be printed on the basis of said identification, form independent concepts of the disclosure, that are particularly independent from the fact that the sinking agent is provided before or after the first surface covering. Therefore, according to its fourth independent aspect, the disclosure relates to a method for manufacturing a method for manufacturing a ceramic tile, comprising the steps of providing a green tile having at least a green ceramic body with an upper surface, providing at least a first surface covering on said upper surface of the green ceramic body providing at least a sinking agent according to a pattern on said green tile, providing at least a décor on said first surface covering, and firing said green tile to obtain a ceramic tile having a surface structure on its upper surface, with the characteristic that the pattern of said sinking agent at least partially correspond to said décor. Moreover, according to its fifth independent aspect the disclosure relates to a method for manufacturing a ceramic tile, comprising the steps of providing a green tile having at least a green ceramic body with an upper surface, providing at least a first surface covering on said upper surface of the green ceramic body providing at least a sinking agent according to a pattern on said green tile, providing at least a décor on said first surface covering, and firing said green tile to obtain a ceramic tile having a surface structure on its upper surface, with the characteristic that said décor is selected on the basis of said pattern of the sinking agent. Preferably, said décor is selected from a plurality of decors that may, possibly, stored in a memory connected to a control unit that is connected to a device for providing said décor. Said method of the fifth aspect can further comprise the step of identify said pattern of the sinking agent and the step of selecting said décor on the basis of this identification. The method of the fifth aspect can further comprise the steps of storing in a first memory connected to a first control unit a first sequence of patterns that identifies the sequence in which the patterns sinking agent are provided on multiple green tiles running on a line, and the step of creating a second sequence of pattern on the basis of the first sequence of pattern, wherein said second sequence of patterns identifies the sequence in which the décors have to be printed on the multiple green tiles running on the line. Said second sequence can be created by the first control unit and stored in the first memory, but it is also possible that it is created by a second control unit and/or stored in a second memory. Said first or second control unit can be connected to a device for providing the décor, preferably an inkjet printer, and can control said device for providing the décor on the basis of said second sequence of patterns. The method according to any of the fourth or fifth independent aspect can comprise one or more of the features described above in relation to any of the first, second or third aspect.

According to a sixth independent aspect the disclosure relates to a line for manufacturing ceramic tiles that comprise one or more transport elements for transporting green ceramic tiles in an advancing directions through multiple processing stations or devices, said processing stations or devices comprising at least a device for providing a sinking agent on the surface of a green tile, and a device for providing at least a first surface covering on said green tile, with the characteristic that said device for providing a sinking agent is disposed upstream of said device for providing at least a first surface covering along said advancing direction. Said device for providing a sinking agent can preferably be a first inkjet printer, preferably a single pass inkjet printer. Said device for providing at least a first surface covering can be, preferably, a sprayer. Alternatively, the device for providing at least a first surface covering can comprise a second inkjet printer, preferably a single pass printer. In this alternative embodiment of the sixth aspect of the disclosure, the first and the second inkjet printer can be two separate printers, or they can be the same printer. In case the first and the second inkjet printer are the same printer it is preferable that said printer is configured for printing the sinking agent before printing the surface covering material, for example in case of single pass printer, the printer can comprise firsts printheads, that are configured for printing the sinking agent, that can be disposed upstream of second printheads, that are configured for printing the first surface covering, along said advancing direction. The line can also comprise a device for providing the décor, preferably a third inkjet printer, preferably single pass. It is noted that the line can comprise also devices for performing any of the method from the first to the fifth independent aspect; and said devices can comprises one or more of the features described in relation to the method from the first to the fifth independent aspect. For example, said devices can comprise: presses and/or compactors for forming the green body; dryer; devices for providing the intermediate layer like, for example, sprayer; one ore more coolers; and/or one a kiln.

According to a second independent aspect, the disclosure relates to a ceramic tile comprising at least a body of ceramic material and a surface covering having an upper surface provided with a surface structure, in which said surface structure is produced according to a predetermined pattern, and in which said relief is produced by digital methods. Said surface structure can be at least partially, preferably entirely made in said surface covering. Preferably the tile comprises a décor, and said decora preferably comprises structural feature corresponding to structural features of said surface structure.

A further independent aspect of the disclosure relates to a set of ceramic tiles or panels, each comprising at least a body of ceramic material having an upper surface provided with a relief, in which said relief is produced according to a predetermined pattern, and in which said pattern is different in each tile of the set.

Further characteristics and advantages of the invention will be apparent from a perusal of the following examples, provided by way of non-limiting example, with the aid of the figures appearing on the attached sheets.
Figure 1 is an axonometric view of a tile produced by the method according to the invention;
Figure 2 is an enlargement of the cross section taken along the plane II-II of Figure 1;
Figure 3 is an enlargement of the area III of Figure 2;
Figure 4 shows schematically a production line and some steps of a method ac-cording to a first possible implementation of the invention;
Figures from 5 to 9 respectively show, schematically, the view of Figure 3 of a tile during some steps of the method of figure 4.

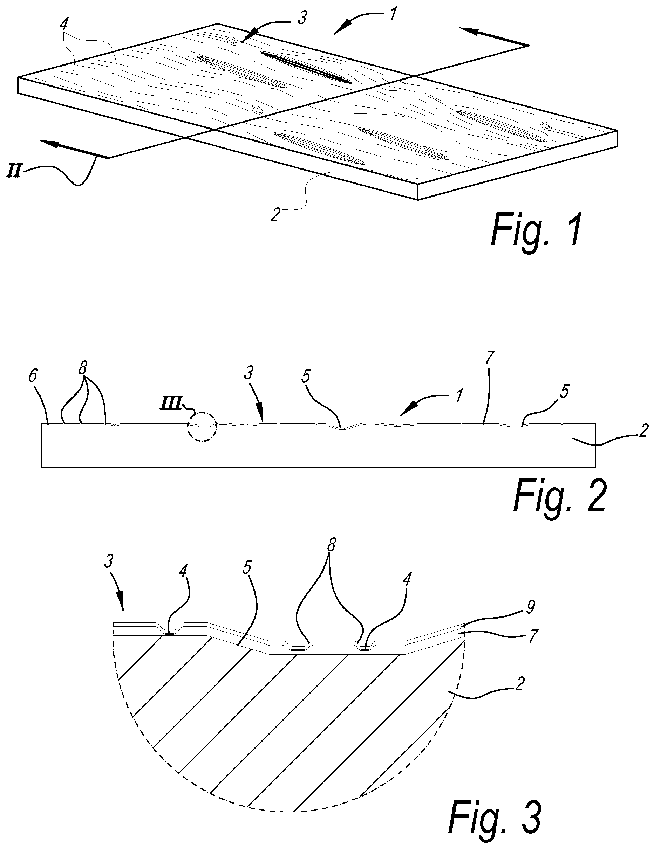

Figure 1 shows a ceramic tile 1 comprising a body 2 of ceramic material, porcellaneous stoneware for example, and an upper surface 3 having a décor 4, representing wood or stone for example.

As shown in Figure 2, the tile 1 of the example comprises a basic structure 5, in form of a relief comprising protrusion and recesses, formed in an upper surface 6 of said body 2 and visible on the upper surface 3. The basic structure 5 may represent the grain of wood or natural stone, and may have structural characteristics, such as recesses or protrusions, corresponding to characteristics of the décor 4. The tile 1 further comprises a first surface covering 7 covering the upper surface 6 of the body 2, said first surface covering comprising a glaze or a smaltobbio. The tile 1, further comprises a surface structure 8 on its upper surface 3 that is realized in the first surface covering 7. In the surface structure 8 is formed by excavation or recesses.

Figure 3 shows that the tile 1 further comprises a second surface covering 9, preferably transparent, that is disposed above the first surface covering 7 and adapted to protect the décor 4. In the preferred embodiment, the second surface covering 9 comprises a transparent glaze.

Figure 3 further shows that the surface structure 8 comprises structural features that corresponds to structural features of the décor 4. For example, the surface structure 8 comprises recesses where the décor 4 represents recessed grains of a wood or of a stone.

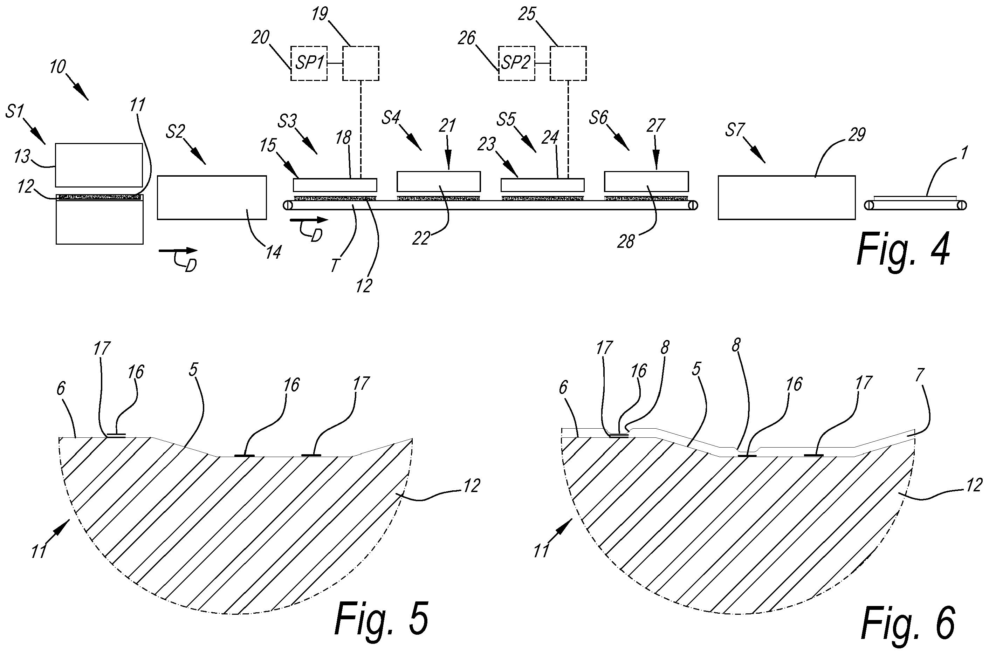

Figure 4 shows some steps of a method and a line 10 for manufacturing the tile 1 of Figure 1.

The method comprises a step S1 of forming a green tile 11, which in this step is substantially defined by a green body 12, by compacting powders of a ceramic mixture. In practice, in a compaction station 13 the powders are compacted, by means of a discontinuous press in the example, so as to impart a substantially panel-like shape to the green body 12.

The green body 12 advances along the line 10 in an advancing direction D, for example by means of transport elements T, towards a drier 14 for removing moisture from the mixture of the green body 12 in a drying step S2. In the example, after the drying step, the body has a residual moisture content of less than 5%.

The green body 12 advances in the direction D towards a station 15 for providing a sinking agent 16,17 on the green tile 11 in a first printing step S3. In the preferred and illustrated example, the station 15 comprises a first inkjet printer 18, preferably a single pass printer. The step S3 is better explained with the help of figure 5.

Figure 5 shows that the sinking agent 16,17 is provided on the upper surface 6 of the green body 12. In the embodiment, a physical sinking agent 16 and a chemical sinking agent 17 are provided. The physical sinking agent 16 comprises a substance that has a low affinity with the first surface covering 7, in particular with a vehicle that is used for providing the first surface covering 7 as will be later explained. The physical sinking agent 16 comprises a hydrophobic substance. The chemical sinking agent 17 comprises a substance that is able to chemically interact with the first surface covering 7 with a glassy structure thereof. For example, the chemical sinking agent 17 comprises bismuth vanadate.

The sinking agents 16,17 are inkjet printed each according to at least a respective pattern. The patterns of the physical sinking agent 16 and the chemical sinking agent 17 at least partially coincide, for example a portion of the physical sinking agent 16 can be printed in the same spot of a portion of the chemical sinking agent 17, in order to create a synergy between the effect of said different sinking agents. As it is shown in figure 5, the physical sinking agent 16 is printed after the chemical sinking agent 17 so that the pattern of the physical sinking agent 16 is provided above the pattern of the chemical sinking agent 17 and be more effective toward the first surface covering 7.

As shown in figure 4, the first inkjet printer 18 is connected with a first control unit 19 connected to a first memory 20. The control unit 19 commands the first inkjet printer 18 to print several patterns of sinking agent 16,17 on multiple green tiles 11 on the line and create a first sequence of pattern SP1 in the memory 20.

Figure 4 further shows that the after the step S3 the green tile 11 reaches a first coating station 21 for providing the first surface covering 7 on the upper surface 6 of the green body 2 and above the sinking agents 16, 17, in a first coating step S4. The coating station 21 comprises a sprayer 22. The first surface covering 7 is provided in form of a slurry, in particular of a water suspension of glaze or smaltobbio powder. Preferably said slurry comprises a density of above 1300 g/l, more preferably between 1300 g/l and 1700 g/l, for example 1650 g/l. Preferably, in step S4, it is provided a dry amount of first surface covering between 200 and 1000 g/m², for example between 600 and 900 g/m².

As shown in figure 6, the first surface covering 7 is at least partially repelled by the physical sinking agent 16 so that the thickness of the first surface covering 7 is lower in above the pattern of the physical sinking agent 16 and the surface structure 8 is partially created immediately after the application of the first surface covering 7.

Going back to figure 4, the green tile 11 is moved to a decoration station 23, preferably comprising a second inkjet printer 24, in particular single pass, for providing the décor 4 on the green tile 11 in a second printing step S5.

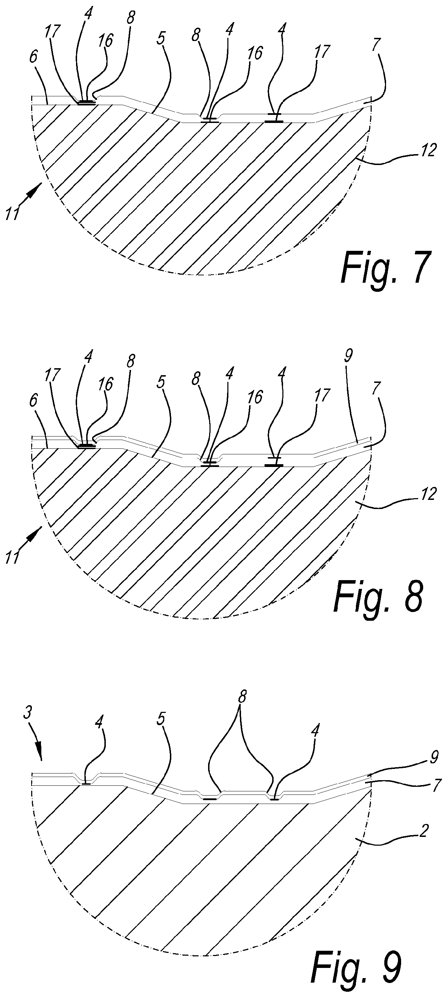

As shown in figure 7, the décor 4 at least partially coincides to the pattern of the sinking agent 16,17 (or to at least one of the patterns of the sinking agents 16, 17).

The second inkjet printer 24 is connected with a second control unit 25 connected to a second memory 26. The second control unit can be connected, for example wireless, with the first control unit 19 and receives from said first control unit 19 information on the first sequence of patterns SP1. On the basis of said information on the first sequence of patterns SP1, the second control unit 25 creates a second sequence of patterns SP2, that can be stored in the second memory 26, for commanding the second inkjet printer 24.

After the second printing step S4, the green tile 11 reaches a second coating station 27 for providing the second surface covering 9 on the green tile 11 in a second coating step S6. The second coating station 27 comprises a sprayer 28 that sprays the second surface covering 9 in form of a slurry on top of the first surface covering 7 and of the décor 4 as shown in figure 8.

The green tile 11 is then subjected to a firing step S7 in a kiln 29, for example a continuous roller kiln, at a maximum temperature of approximately 1220°C, so as to produce the tile 1.

As shown in figure 9, during the firing step S7 the physical sinking agent 16 may degrade whereas the chemical sinking agent 17 interacts with the glassy structure of the first surface covering thereby causing the formation, at least partially, of the surface structure 9. In those spots where the pattern of the physical sinking agent 16 and the chemical sinking agent 17 coincides their effects combines so that the chemical sinking agent can increase the deepness of the surface structure 9 already formed by the physical sinking agent 16.

In practice, the materials used, as well as the contingent shapes and dimensions, may be any, according to requirements, without thereby departing from the protective scope of the following claims.

## Claims

1. A method for manufacturing a ceramic tile (1) that comprises the steps of:
- providing (S1) a green tile (11) having at least a green body (12) with an upper surface (6);
- providing (S4) at least a first surface covering (7) on said upper surface (6) of the green body (11), said first surface covering comprising a glassy substance and being provided in the form of a suspension in water;
- providing a décor (4) on said first surface covering (7); and
- firing (S7) said green tile (11) to obtain a ceramic tile (1) having a surface structure (8) on its upper surface (3),
**characterized in that** it comprises a step (S3) of applying at least one physical sinking agent (16) and one chemical sinking agent (17)said sinking agents (16,17) determining said surface structure (8);
**in that** said physical sinking agent is able to physically interact with the water of the first surface covering in order to create the surface structure, said physical sinking agent comprising an hydrophobic substance;
**in that** chemical sinking agent (17 ) is able to chemically interact with the glassy substance of the first surface covering in order to create the surface structure, on the upper surface (6) of the green tile (11), said chemical sinking agent comprising metal oxides;
**in that** wherein the physical and chemical sinking agents (16,17) are applied by means of inkjet printing each according to a respective pattern,
**in that** said step of applying said physical and chemical sinking agents (16,17) is performed before said step (S4) of providing the first surface covering (7), **in that** the physical and chemical sinking agent (16,17) are applied directly onto the upper surface (6) of the green body (12);
and **in that** said respective patterns of the physical and chemical sinking agent (16, 17) being at least partially coinciding.

2. The method according to claim 1, **characterized in that** the chemical sinking agent (17) is provided before the physical sinking agent (16).

3. The method according to any of the preceding claims, **characterized in that** the first surface covering (7) comprises a glaze or an engobe or a smaltobbio.

4. The method according to any of the preceding claims, **characterized in that** the first surface covering (7) is provided with a dry weight between 600 and 900 g/m2.

5. The method according to any of the preceding claims, **characterized in that** said patterns of the physical and chemical sinking agents (16,17) are at least partially, preferably completely, coinciding to said décor (4).

6. The method according to claim 1, wherein said respective patterns of the physical and chemical sinking agent (16, 17) are only partially coinciding.

7. The method according to claim 1, wherein said chemical sinking agent (17) comprise bismuth oxide.

8. The method according to claim 7, wherein said chemical sinking agent (17) comprise bismuth vanadate.

## Patentansprüche

1. Verfahren zur Herstellung einer Keramikfliese (1), das die folgenden Schritte umfasst:
- das Bereitstellen (S1) einer Grünfliese (11), die mindestens einen Grünkörper (12) aufweist, die eine obere Fläche (6) umfasst;
- das Bereitstellen (S4) mindestens einer ersten Oberflächenbeschichtung (7) auf der oberen Fläche (6) des Grünkörpers (12), wobei die erste oben genannte Oberflächenbeschichtung eine glasartige Substanz umfasst und in Form einer Suspension in Wasser bereitgestellt wird;
- das Bereitstellen eines Dekors (4) auf der ersten oben genannten Oberflächenbeschichtung (7); und
- das Brennen (S7) der oben genannten Grünfliese (11), um eine Keramikfliese (1) zu erzielen, die auf ihrer oberen Seite (3) eine Oberflächenstruktur (8) aufweist;
**dadurch gekennzeichnet, dass** es einen Schritt (S3) umfasst, in dem mindestens ein physikalisches Absinkmittel (16) und ein chemisches Absinkmittel (17) aufgebracht werden, wobei die oben genannten Absinkmittel (16, 17) die oben genannte Oberflächenstruktur (8) bestimmen;
dass das oben genannte physikalische Absinkmittel in der Lage ist, physikalisch mit dem Wasser der ersten Oberflächenbeschichtung zu interagieren, um die Oberflächenstruktur zu erzeugen, wobei das oben genannte physikalische Absinkmittel eine hydrophobe Substanz umfasst;
dass das chemische Absinkmittel (17) in der Lage ist, chemisch mit der glasartigen Substanz der ersten Oberflächenbeschichtung zu interagieren, um die Oberflächenstruktur auf der oberen Fläche (6) der Grünfliese (11) zu erzeugen, wobei das oben genannte chemische Absinkmittel Metalloxide umfasst;
dass die physikalischen und chemischen Absinkmittel (16, 17) mittels Tintenstrahldruck aufgebracht werden, jeweils entsprechend einem jeweiligen Muster;
dass der oben genannte Schritt, in dem die oben genannten physikalischen und chemischen Absinkmittel (16, 17) aufgebracht werden, vor dem oben genannten Schritt (S4) durchgeführt wird, in dem die erste Oberflächenbeschichtung (7) bereitgestellt wird;
dass die physikalischen und chemischen Absinkmittel (16, 17) direkt auf die obere Fläche (6) des Grünkörpers (12) aufgebracht werden;
und dass die oben genannten jeweiligen Muster der physikalischen und chemischen Absinkmittel (16, 17) zumindest teilweise übereinstimmen.

2. Verfahren nach Anspruch 1, **dadurch gekennzeichnet, dass** das chemische Absinkmittel (17) vor dem physikalischen Absinkmittel (16) bereitgestellt wird.

3. Verfahren nach einem der vorhergehenden Ansprüche, **dadurch gekennzeichnet, dass** die erste Oberflächenbeschichtung (7) eine Glasur oder eine Engobe oder einen Smaltobbio umfasst.

4. Verfahren nach einem der vorhergehenden Ansprüche, **dadurch gekennzeichnet, dass** die erste Oberflächenbeschichtung (7) mit einem Trockengewicht zwischen 600 und 900 g/m² versehen wird.

5. Verfahren nach einem der vorhergehenden Ansprüche, **dadurch gekennzeichnet, dass** die oben genannten Muster der physikalischen und chemischen Absinkmittel (16, 17) zumindest teilweise, vorzugsweise vollständig, mit dem Dekor (4) übereinstimmen.

6. Verfahren nach Anspruch 1, wobei die jeweiligen oben genannten Muster der physikalischen und chemischen Absinkmittel (16, 17) nur teilweise übereinstimmen.

7. Verfahren nach Anspruch 1, wobei das oben genannte chemische Absinkmittel (17) Wismutoxid umfasst.

8. Verfahren nach Anspruch 7, wobei das oben genannte chemische Absinkmittel (17) Wismutvanadat umfasst.

## Revendications

1. Procédé destiné à la fabrication d'un carreau en céramique (1), qui comprend les étapes au cours desquelles :
- on procure (S1) un carreau non cuit (11) qui possède au moins un corps non cuit (12) qui comprend une surface supérieure (6) ;
- on procure (S4) au moins un premier revêtement de surface (7) sur ladite surface supérieure (6) du corps non cuit (12), dans lequel ledit premier revêtement de surface comprend une substance vitreuse et est procuré sous la forme d'une suspension dans de l'eau ;
- on procure un décor (4) sur ledit premier revêtement de surface (7) ; et
- on cuit (S7) ledit carreau non cuit (11) afin d'obtenir un carreau en céramique (1) qui possède une structure superficielle (8) sur sa surface supérieure (3) ;
**caractérisé en ce qu'**il comprend une étape (S3) dans laquelle on applique au moins un agent pénétrant physique (16) et un agent pénétrant chimique (17), dans lequel lesdits agents pénétrants (16, 17) déterminent ladite structure superficielle (8) ;
**en ce que** ledit agent pénétrant physique est capable d'entrer en interaction par voie physique avec l'eau du premier revêtement de surface dans le but de créer la structure superficielle ; dans lequel ledit agent pénétrant physique comprend une substance hydrophobe ;
**en ce que** l'agent pénétrant chimique (17) est capable d'entrer en interaction par voie chimique avec la substance vitreuse du premier revêtement de surface dans le but de créer la structure superficielle sur la surface supérieure (6) du carreau non cuit (11) ; dans lequel ledit agent pénétrant chimique comprend des oxydes de métaux ;
**en ce que** les agents pénétrants physique et chimique (16, 17) sont appliqués au moyen d'une impression par jet d'encre, chaque fois en conformité avec un motif respectif ;
**en ce que** ladite étape au cours de laquelle on applique lesdits agents pénétrants physique et chimique (16, 17) est mise en œuvre avant ladite étape (S4) au cours de laquelle on procure le premier revêtement de surface (7) ;
**en ce que** les agents pénétrants physique et chimique (16, 17) sont appliqués directement sur la surface supérieure (6) du corps non cuit (12) ;
et **en ce que** lesdits motifs respectifs des agents pénétrants physique et chimique (16, 17) coïncident, au moins en partie.

2. Procédé selon la revendication 1, **caractérisé en ce que** l'agent pénétrant chimique (17) est procuré avant l'agent pénétrant physique (16).

3. Procédé selon l'une quelconque des revendications précédentes, **caractérisé en ce que** le premier revêtement de surface (7) comprend une glaçure ou un engobe ou un smaltobbio.

4. Procédé selon l'une quelconque des revendications précédentes, **caractérisé en ce que** le premier revêtement de surface (7) est procuré avec un poids à sec qui se situe entre 600 et 900 g/m².

5. Procédé selon l'une quelconque des revendications précédentes, **caractérisé en ce que** lesdits motifs des agents pénétrants physique et chimique (16, 17) coïncident, au moins en partie, de préférence complètement, avec ledit décor (4).

6. Procédé selon la revendication 1, dans lequel lesdits motifs respectifs des agents pénétrants physique et chimique (16, 17) coïncident seulement en partie.

7. Procédé selon la revendication 1, dans lequel ledit agent pénétrant chimique (17) comprend de l'oxyde de bismuth.

8. Procédé selon la revendication 7, dans lequel ledit agent pénétrant chimique (17) comprend du vanadate de bismuth.
